# EUROPÄISCHE PATENTSCHRIFT

(11) **EP 0 617 505 B1**
(45) Veröffentlichungstag und Bekanntmachung des Hinweises auf die Patenterteilung: **06.11.1996**
(21) Anmeldenummer: 94103651.9
(22) Anmeldetag: 10.03.1994
(51) Int. Cl.: H02P 7/638, H01H 9/06

(54) **Schaltungsanordnung zur Drehzahlregelung von Elektromotoren**
Electric motor speed control unit
Circuit pour réguler la vitesse de moteurs électriques

(30) Priorität: 20.03.1993 DE 4309011
(43) Veröffentlichungstag der Anmeldung: 28.09.1994
(73) Patentinhaber: Marquardt GmbH, 78604 Rietheim-Weilheim (DE)
(72) Erfinder: Walz, Hubert, D-78564 Wehingen (DE)
(74) Vertreter: Patentanwälte Eisele, Otten & Roth

(56) Entgegenhaltungen:
- EP-A- 0 095 073
- DE-A- 3 512 438
- DE-A- 4 121 264
- DE-U- 9 016 527
- US-A- 4 283 666

## Beschreibung

Die Erfindung betrifft eine Schaltungsanordnung zur Drehzahlregelung von Elektromotoren nach dem Oberbegriff des Patentanspruchs 1, einen dazugehörigen elektrischen Schalter nach dem Oberbegriff des Patentanspruchs 16 sowie einen Sollwertgeber nach dem Oberbegriff des Patentanspruchs 17.

An Elektrohandwerkzeugen, wie Bohrmaschinen, Bohrhämmer, Schrauber, Elektrohobel, Stichsägen u. dgl., sind häufig Schaltungen zur Drehzahlsteuerung oder -regelung angeordnet, die eine Verstellung der Drehzahl des Elektromotors zwischen einer minimalen, meistens von Null verschiedenen Drehzahl und einer maximalen Drehzahl gestatten. Dazu sind derartige Elektrohandwerkzeuge mit einem Schalter, wie er beispielsweise in der DE-OS 41 21 264 gezeigt wird, ausgestattet, wobei dessen Betätigungsorgan auf einen Sollwertgeber einwirkt. Der Sollwertgeber gibt wiederum eine elektrische Steuergröße, deren Betrag in Abhängigkeit von der Stellung des Betätigungsorgans steht, an die Drehzahlsteuerung oder -regelung ab, die anhand dieser Steuergröße die entsprechende Drehzahl am Elektromotor einstellt und gegebenenfalls regelt.

Zur feinfühligen Einstellung der Drehzahl im unteren Drehzahlbereich wird ein Sollwertgeber gewünscht, dessen Kennlinie, die die Abhängigkeit der elektrischen Steuergröße von der Stellung des Betätigungsorgans beschreibt, zwei Bereiche mit unterschiedlicher Steigung aufweist. Nämlich einen ersten Bereich für niedere Drehzahlen, bei dem eine Änderung des Stellung des Betätigungsorgans nur eine geringe Drehzahländerung hervorruft und einen zweiten Bereich für höhere Drehzahlen, wo eine Änderung der Stellung des Betätigungsorgans eine größere Drehzahländerung bewirkt.

Eine derartige Schaltungsanordnung ist aus der DE-OS 32 19 476 bekannt geworden. Dort besteht der Sollwertgeber aus einem Potentiometer mit daran angeordneten Festwiderständen. Wegen beschränkter Platzverhältnisse im elektrischen Schalter und aus Kostengründen wird im allgemeinen ein lineares Potentiometer mit einer im wesentlichen über den ganzen Verstellbereich eine bestimmte Steigung besitzenden, linearen Kennline verwendet. Um trotzdem die gewünschte Kennlinie mit zwei Bereichen unterschiedlicher Steigung zu erzielen, wird der Schleiferanschluß des Potentiometers auf einen seiner Eingangsanschlüsse zurückgeführt, wie in der genannten Offenlegungsschrift, allerdings ohne nähere Erläuterungen, anhand der Figur zu sehen ist.

Diese bekannte Schaltungsanordnung besitzt verschiedene Nachteile. So sind die Toleranzen des Potentiometers störend, die einen aufwendigen nachträglichen Abgleich erfordern, um eine bestimmte Bereichsaufteilung der Kennlinie des Sollwertgebers innerhalb vorgegebener Schranken zu erhalten. Zudem hat es sich gezeigt, daß Instabilitäten und Alterungserscheinungen, insbesondere durch Feuchtigkeitseinfluß, nach gewisser Zeit beim Potentiometer auftreten können, d. h. die beim Abgleich eingestellte Kennlinie kann sich nachträglich verändern, so daß Reklamationen des Kunden die Folge sind. Besonders nachteilig wirken sich derartige Alterungserscheinungen auf die minimale Drehzahl aus, da dort aufgrund der geringen Drehzahl deren Veränderung besonders stark ins Gewicht fällt und folglich zur Unbrauchbarkeit des Sollwertgebers und damit des Elektrohandwerkzeugs führen kann.

Der Erfindung liegt die Aufgabe zugrunde, eine Schaltungsanordnung der eingangs genannten Art mit einer zwei Bereiche von unterschiedlicher Steigung aufweisenden Kennlinie unter Verwendung eines linearen Potentiometers zu schaffen, die unempfindlich gegen Instabilitäten, Alterungserscheinungen und Toleranzen ist. Insbesondere soll der der minimalen und maximalen Drehzahl zugeordnete Betrag der elektrischen Steuergröße während der Lebensdauer der Schaltungsanordnung stabil sein.

Diese Aufgabe wird bei einer gattungsgemäßen Schaltungsanordnung durch die kennzeichnenden Merkmale des Patentanspruchs 1 sowie bei einem elektrischen Schalter und einem Sollwertgeber durch die kennzeichnenden Merkmale der Patentansprüche 16 und 17 gelöst.

Weitere Ausgestaltungen der Erfindung sind Gegenstand der Unteransprüche.

Die mit der Erfindung erzielten Vorteile bestehen insbesondere darin, daß der Einfluß von Toleranzen des Potentiometers in der erfindungsgemäßen Schaltungsanordnung weitgehend eliminiert ist. Für die Steigungen in den beiden Bereichen der Kennlinie ist vor allem die Größe der stabilen Festwiderstände bestimmend, während im Gegensatz zur herkömmlichen Schaltungsanordnung die absolute Größe des Potentiometerwiderstandes von untergeordnetem Einfluß ist. Somit ist eine Änderung des Gesamtwiderstandes des Potentiometers in einem weiten Bereich unerheblich für die Kennlinie. Folglich haben Alterungserscheinungen und Feuchtigkeitseinwirkung keinen merkbaren Einfluß auf die Schaltungsanordnung, insbesondere verändern sich einmal eingestellte Werte für die minimale und maximale Drehzahl nicht mehr nachträglich.

Da an das Potentiometer keine hohen Anforderungen gestellt werden müssen, kann außerdem ein einfaches und billiges Potentiometer, beispielsweise ein solches, bei dem die Widerstandsbahnen auf einem Substrat aus Hartpapier aufgebracht sind, verwendet werden. Von Vorteil ist dabei weiter, daß auch die dort kaum kalkulierbaren und sehr stark schwankenden Übergangswiderstände zwischen dem Schleifer und den Widerstandsbahnen des Potentiometers keine wesentliche Rolle spielen. Insgesamt handelt es sich bei der erfindungsgemäßen Schaltungsanordnung folglich auch um eine billige und damit außerordentlich wirtschaftliche Lösung.

Eine gewünschte Variation der Steigungen der Kennlinie in den beiden Bereichen und besonders des Punktes, der die beiden Bereiche in der Kennlinie voneinander trennt, ist durch Dimensionierung der an das lineare Potentiometer angeschalteten Bauteile möglich, wobei es nicht notwendig ist, ein unlineares Potentiometer oder ein Potentiometer mit anderem Widerstandswert zu verwenden. Damit können mit demselben Potentiometer auch unterschiedliche Sollwertgeber realisiert werden, so daß sich die erfindungsgemäße Lösung als außerordentlich flexibel erweist.

Schaltungsanordnungen zur Drehzahlregelung von Elektromotoren werden häufig in Elektrohandwerkzeugen eingesetzt. Es hat sich dabei als vorteilhaft erwiesen, die erfindungsgemäße Schaltungsanordnung in den elektrischen Schalter zu integrieren. Im folgenden soll als Ausführungsbeispiel ein derartiger elektrischer Schalter, wie er in den Zeichnungen dargestellt ist, näher beschrieben werden. Es zeigen
- Fig. 1: eine schematische Darstellung eines elektrischen Schalters zur Drehzahlregelung von Elektromotoren in Elektrohandwerkzeugen in perspektivischer und teilweise aufgeschnittener Ansicht,
- Fig. 2: ein Prinzipschaltbild einer Drehzahlregelung für Elektromotoren,
- Fig. 3: die nähere Ausbildung eines Potentiometers für den Sollwertgeber des elektrischen Schalters,
- Fig. 4: das Schaltbild für den Sollwertgeber,
- Fig. 5: das Schaltbild für den Sollwertgeber mit veränderter Kennlinie,
- Fig. 6: eine Kennlinie für die vom Sollwertgeber abgegebene Steuerspannung in Abhängigkeit von der Stellung des Betätigungsorgans,
- Fig. 7: das Schaltbild für den Sollwertgeber in einer weiteren Ausführungsform,
- Fig. 8: das Schaltbild für den Sollwertgeber in einer abermals weiteren Ausführungsform und
- Fig. 9: das Schaltbild für den Sollwertgeber in nochmals einer weiteren Ausführungsform.

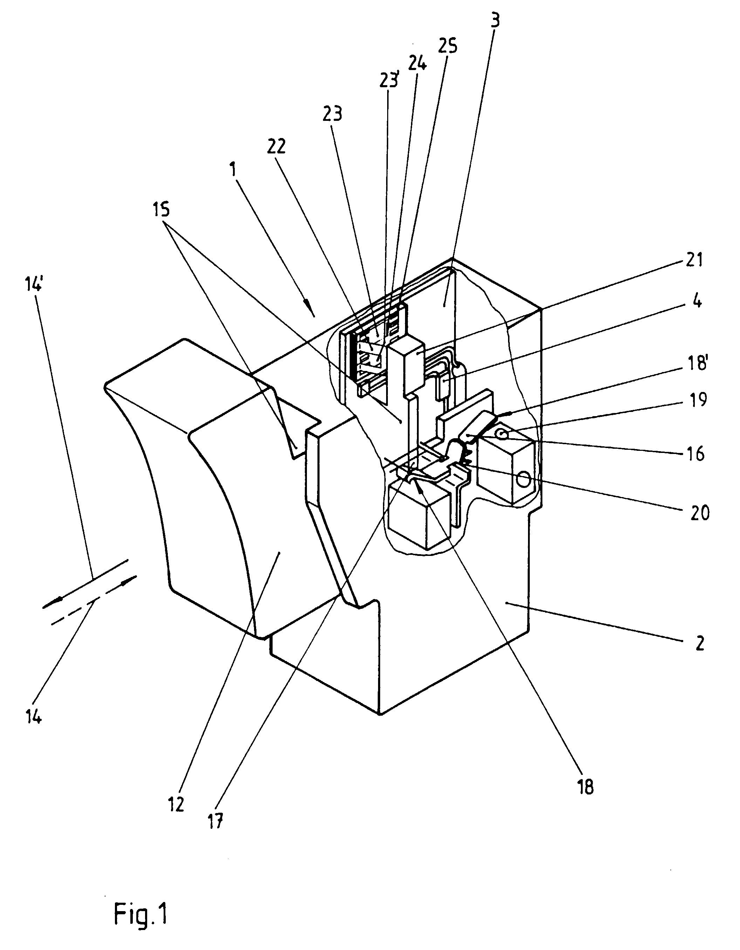

Ein elektrischer Schalter 1 zur Drehzahlregelung von Elektromotoren in Elektrohandwerkzeugen ist in Fig. 1 schematisch dargestellt. Der Schalter 1 besitzt ein Schaltergehäuse 2, in welchem eine Leiterplatte 3 angeordnet ist. Auf der Leiterplatte 3 befinden sich die elektrischen und elektronischen Bauelemente 4 einer als Phasenanschnittsteuerung ausgebildeten Schaltungsanordnung für die Drehzahlregelung des Elektromotors.

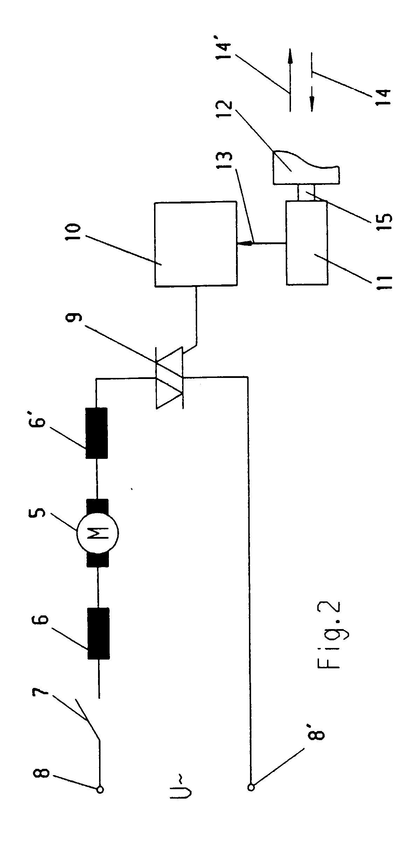

Das prinzipielle Schaltbild für die Phasenanschnittsteuerung ist näher in Fig. 2 zu sehen. Der Anker 5 und die Feldwicklungen 6, 6' des Elektromotors sind über einen Netzschalter 7 an einen Pol 8 einer Versorgungsspannung U angeschlossen. Der andere Pol 8' der Versorgungsspannung U ist über ein Schaltereigenschaften aufweisendes elektronisches Bauteil, vorzugsweise einen Triac 9, wiederum mit der Feldwicklung 6' verbunden. An der Steuerelektrode des Triacs 9 ist eine an sich bekannte, lediglich als Blockschaltbild angedeutete Elektronik 10 für die Phasenanschnittsteuerung angeschlossen. Die Drehzahl des Elektromotors wird von der Elektronik 10 eingestellt und geregelt, indem diese den Triac 9 beim entsprechenden Phasenwinkel bzw. Stromflußwinkel θ der Versorgungsspannung U zündet. Durch die Elektronik 10 ist der der kleinsten einstellbaren, in der Regel von Null verschiedenen Drehzahl entsprechende Stromflußwinkel θₘᵢₙ und der der maximal einstellbaren Drehzahl entsprechende Stromflußwinkel θₘₐₓ vorgegeben.

Mit der Elektronik 10 ist ein Sollwertgeber 11 über eine Leitung 13 elektrisch verbunden. Dieser Sollwertgeber 11 wird auf die gewünschte Drehzahl des Elektromotors eingestellt, wobei diese Einstellung bei Elektrohandwerkzeugen in der Regel durch manuelles Verstellen, wie in Fig. 2 durch den Doppelpfeil 14, 14' angedeutet, eines mechanisch mit dem Sollwertgeber 11 gekoppelten Betätigungsorgans 12 erfolgt. Aufgrund der Einstellung mittels des Betätigungsorgans 12 gibt der Sollwertgeber 11 dann eine vom Verstellweg s des Betätigungsorgans 12 abhängige, mit der entsprechenden Drehzahl korrelierende elektrische Steuergröße, vorzugsweise eine Steuerspannung Us, über die Leitung 13 an die Elektronik 10 ab, wobei diese Steuerspannung zur Einstellung des zugehörigen Stromflußwinkels θ durch die Elektronik 10 dient.

Wie weiter in Fig. 1 dargestellt ist, ist beim Schalter 1 das als Drücker ausgebildete Betätigungsorgan 12 verstellbar am Schaltergehäuse 2 gelagert und besitzt einen daran befestigten, in das Innere des Schalters 1 führenden Betätigungsstößel 15. Das Betätigungsorgan 12 kann manuell in Richtung des Pfeiles 14 gegen eine nicht dargestellte Druckfeder bewegt werden, so daß es nach Loslassen wieder in die Ausgangsstellung entsprechend dem Pfeil 14' zurückkehrt.

Der im Prinzipschaltbild nach Fig. 2 schematisch gezeigte Netzschalter 7 ist ebenfalls in den Schalter 1 integriert und besteht aus einer Kontaktwippe 16 und einem Anschlußkontakt 19. In unbetätigtem Zustand des Betätigungsorgans 12 wirkt ein am Betätigungsstößel 15 befindlicher Schaltnocken 17 auf das eine Ende 18 der Kontaktwippe 16 ein, so daß die Kontaktverbindung zwischen dem anderen Ende 18' der Kontaktwippe 16 und dem Anschlußkontakt 19 geöffnet ist. Bei Betätigung des Betätigungsorgans 12 gibt der Schaltnocken 17 das Ende 18 der Kontaktwippe 16 frei und eine Zugfeder 20 zieht das andere Ende 18' der Kontaktwippe 16 an den Anschlußkontakt 19, so daß die elektrische Verbindung am Netzschalter 7 nunmehr geschlossen ist.

Der Sollwertgeber 11 zur Erzeugung der elektrischen Steuerspannung Us, der nachfolgend noch näher beschrieben wird, enthält ein lineares Potentiometer 24. Das Potentiometer 24 setzt sich wiederum aus Widerstandsbahnen 23, 23' und einem Schleifer 22 zusammen. Der Schleifer 22, der an einem im Innern des Schalters 1 am Betätigungsstößel 15 befindlichen Ansatz 21 befestigt ist, gleitet mit einem Ende auf den beiden auf der Leiterplatte 3 angeordneten Widerstandsbahnen 23, 23'. Durch Bewegung des Betätigungsorgans 12 wird der Schleifer 22 auf den Widerstandsbahnen 23, 23' bewegt und damit die Stellung des Potentiometers 24 entsprechend dem Verstellweg s des Betätigungsorgans 12 verändert.

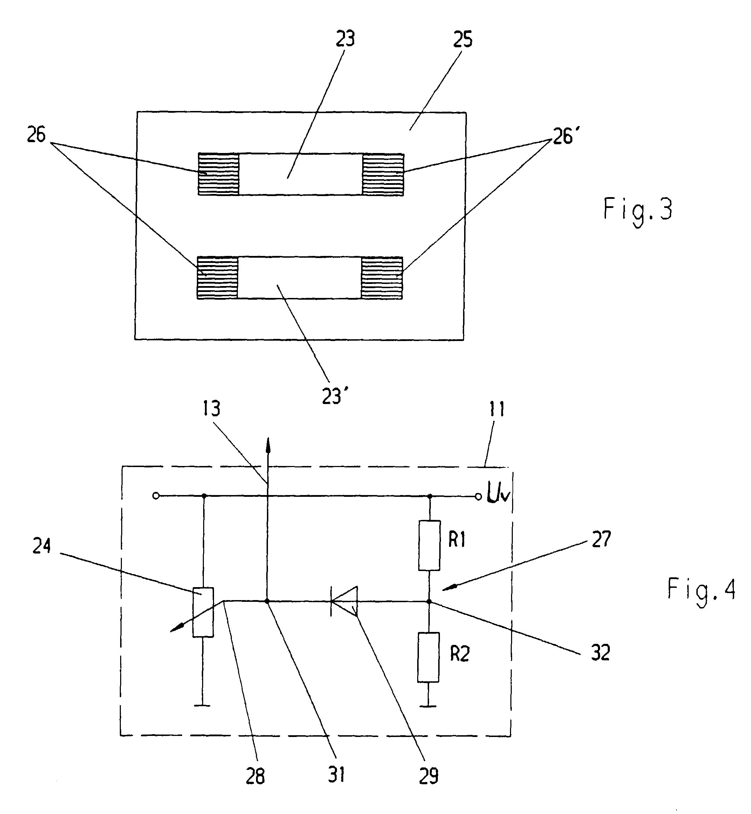

Die Widerstandsbahnen 23, 23' sind auf einem Substrat 25 aufgebracht, wie in Fig. 3 weiter gezeigt ist. Im allgemeinen sind die Widerstandsbahnen 23, 23' mit einer entsprechenden Widerstandspaste auf dem Substrat 25 aufgedruckt und anschließend in das Substrat 25 eingebrannt. Das Substrat 25 kann aus Hartpapier bestehen, besonders wenn es sich um ein kostengünstiges Potentiometer handeln soll. Die Enden der Widerstandsbahnen 23, 23' sind zur Kontaktierung mit Leitsilberschichten 26, 26' versehen. Aufgrund des genannten Herstellungsprozesses für die Widerstandsbahnen 23, 23' sind mit vertretbarem Aufwand nur lineare Potentiometer 24 herzustellen, die zudem größere Toleranzen in Bezug auf deren Gesamtwiderstand besitzen. Hinzu kommt, daß das Potentiometer 24 lediglich eine geringe Größe besitzen darf, wenn es, wie gefordert, im Schalter 1 untergebracht werden soll. In der Regel ist dann nur noch eine wirksame Länge von wenigen Millimetern für die Widerstandsbahnen 23, 23' vorhanden, was wiederum nur die Realisierung eines linearen Potentiometers gestattet.

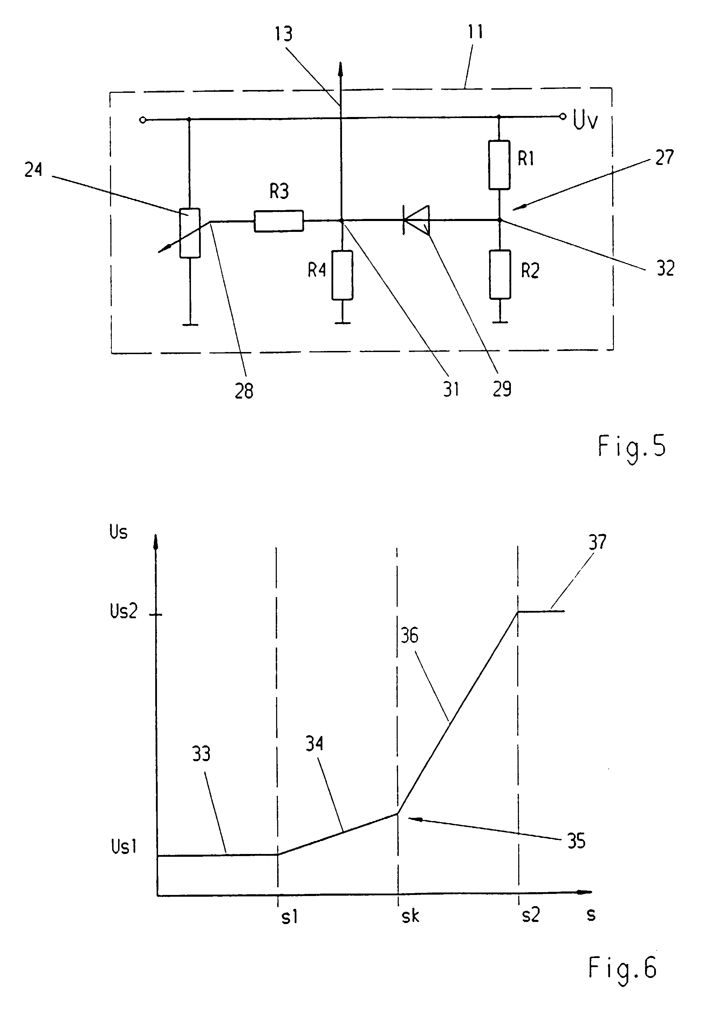

Zur feinfühligen Einstellung der Drehzahl des Elektromotors wird jedoch im allgemeinen gefordert, daß der Sollwertgeber 11 eine Kennlinie besitzt, die nicht linear über deren gesamten Bereich verläuft, sondern im Bereich niederer und hoher Drehzahlen des Elektromotors jeweils unterschiedliche Steigungen besitzt. Bei der Kennlinie, wie sie exemplarisch in Fig. 6 gezeigt ist, handelt es sich um den Verlauf der an die Elektronik 10 vom Sollwertgeber 11 abgegebenen Steuerspannung in Abhängigkeit vom Verstellweg s des Betätigungsorgans 12 bzw. der Stellung des Potentiometers 24. Insbesondere soll im Bereich niedriger Drehzahlen die Steigung der Kennlinie des Sollwertgebers 11 relativ flach verlaufen, während im Bereich höherer Drehzahlen eine steilere Kennlinie gewünscht wird. Beispielsweise kann dann mit einer elektrischen Handbohrmaschine sehr feinfühlig angebohrt werden, da einer kleinen Verschiebung des Betätigungsorgans 12 durch den Benutzer auch nur eine kleine Drehzahländerung entspricht. Danach kann der Benutzer zum Weiterbohren die Drehzahl bis zur größtmöglichen Drehzahl steigern, wobei im höheren Drehzahlbereich, wie gewünscht, die Drehzahländerung bei kleiner Verschiebung des Betätigungsorgans 12 größer ist.

Die Schaltung eines derartigen Sollwertgebers 11 ist näher in Fig. 4 zu sehen. Sie besteht aus einem linearen Potentiometer 24 und einem aus zwei Festwiderständen R1, R2 bestehenden Spannungsteiler 27, der zwischen der Versorgungsspannung Uv und Masse liegt. Zwischen dem Schleiferanschluß 28 des Potentiometers 24 und dem Verbindungspunkt 32 zwischen den beiden Widerständen R1, R2 des Spannungsteilers 27 ist ein Bauelement 29 mit elektrischer Ventilwirkung so angeschaltet, daß die Kathode des Bauelementes 29 dem Schleiferanschluß 28 zugewandt ist. Die der Elektronik 10 über die Leitung 13 zugeführte Steuerspannung Us, deren Größe mit der Solldrehzahl des Elektromotors korreliert, wird an der Verbindung 31 zwischen dem Bauelement 29 mit Diodencharakteristik und dem Schleiferanschluß 28 des Potentiometers 24 abgenommen.

Im folgenden soll nun die Wirkungsweise der Schaltung für den Sollwertgeber 11 anhand der in Fig. 6 gezeigten Kennlinie näher erläutert werden, wobei davon ausgegangen wird, daß die Anordnung des Bauelementes 29 mit elektrischer Ventilwirkung entscheidend zum aufgefundenen Verhalten der erfindungsgemäßen Schaltungsanordnung beiträgt.

Wird das Betätigungsorgan 12 gemäß Fig. 1 und 2 am Schalter 1 betätigt, so wird über die Kontaktwippe 16 der Netzschalter 7 eingeschaltet. Solange der Schleifer 22 des Potentiometers 24 sich auf den der Anfangsstellung zugeordneten Leitsilberschichten 26, die in Fig. 3 zu sehen sind, befindet, ist das Potentiometer 24 in "Null-Stellung" und der Schleiferanschluß 28 liegt an Masse, womit das Bauelement 29 mit elektrischer Ventilwirkung leitend geschaltet ist. Die Steuerspannung Us1 ist in diesem Bereich der Kennlinie gemäß Fig. 6, dem linken horizontalen Ast 33, konstant und entspricht derjenigen für die Mindestdrehzahl des Elektromotors.

Wird das Betätigungsorgan 12 weiter bewegt, so gelangt der Schleifer 22 des Potentiometers 24 bei einem Verstellweg s1 auf die Widerstandsbahnen 23, 23' und der Widerstand des Potentiometers 24 bezüglich des Schleiferanschlusses 28 verändert sich linear mit dem Verstellweg s des Betätigungsorgans 12. Das Bauelement 29 mit elektrischer Ventilwirkung bleibt vorerst im leitenden Zustand und die Steuerspannung Us verändert sich in Abhängigkeit des Verstellweges s, wobei die Kennlinie in diesem Bereich 34 eine Steigung aufweist, deren Betrag vorwiegend von der Größe der Widerstände R1, R2 des Spannungsteilers 27 abhängt. Die Widerstände R1, R2 können daher so dimensioniert werden, daß die Kennlinie in diesem Bereich 34 relativ flach verläuft, so daß eine kleine Änderung des Verstellweges s nur zu einer kleinen Änderung der Steuerspannung Us und damit lediglich zu einer kleinen Drehzahländerung des Elektromotors führt. Insbesondere ist hervorzuheben, daß der Widerstand des Potentiometers 24 im Bereich 34 lediglich eine untergeordnete Rolle für die Steigung der Kennlinie spielt. Dadurch ist gewährleistet, daß sich Toleranzen und nachträgliche Veränderungen des Widerstandes des Potentiometers 24 nicht unerwünschterweise auf die Kennlinie in diesem an sich kritischen Bereich 34 niedriger Drehzahlen auswirken können.

Bei einem bestimmten Verstellweg sk des Betätigungsorgans 12 wird der Knickpunkt 35 am Ende des Bereichs 34 in der Kennlinie erreicht, wo das Bauelement 29 mit elektrischer Ventilwirkung in den sperrenden Zustand gelangt. Die Lage des Knickpunktes 35 ist von der Durchlaßspannung des Bauelementes 29 mit elektrischer Ventilwirkung abhängig, da der Knickpunkt 35 vom Übergang zwischen leitendem und sperrendem Zustand des Bauelementes 29 mit elektrischer Ventilwirkung bestimmt wird.

Bei weiterer Bewegung des Betätigungsorgans 12 verläuft die Kennlinie nun im Bereich 36, wobei deren Steigung aufgrund der sperrenden Wirkung des Bauelements 29 mit elektrischer Ventilwirkung nun wesentlich steiler als im Bereich 34 ist. Im Bereich 36 führt eine kleine Änderung des Verstellweges s zu einer großen Änderung der Steuerspannung Us und damit auch zu einer großen Drehzahländerung. Da die Kennlinie hier sehr steil verläuft, ist auch wiederum sichergestellt, daß sich Toleranzen und Veränderungen des Widerstandes des Potentiometers 24 allenfalls unwesentlich in diesem Bereich hoher Drehzahlen auswirken können.

Schließlich gelangt der Schleifer 22 des Potentiometers 24 beim Verstellweg s2 des Betätigungsorgans 12 auf die der Endstellung zugeordneten Leitsilberschichten 26', die in Fig. 3 gezeigt sind. In dieser "Ein-Stellung" ist in der Schaltung der gesamte Widerstand des Potentiometers 24 wirksam, d. h. der Schleiferanschluß 28 befindet sich auf dem Potential der Versorgungsspannung Uv, womit die Kennlinie in diesem Bereich entlang des rechten horizontalen Astes 37 konstant verläuft. Die dabei abgegebene Steuerspannung Us2 entspricht der maximalen Drehzahl des Elektromotors.

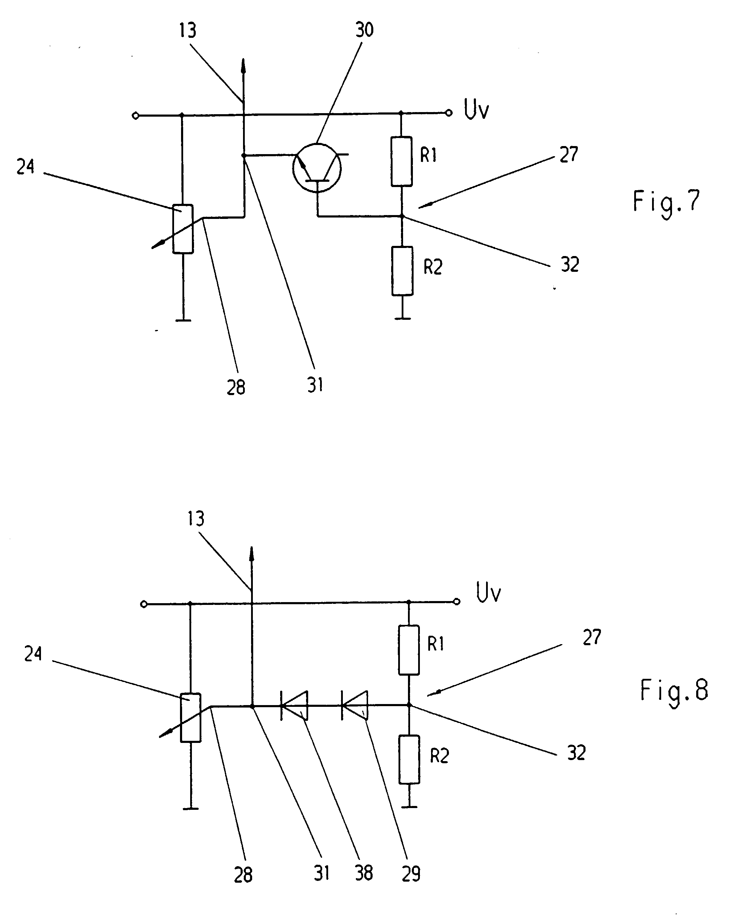

Unter einem Bauelement mit elektrischer Ventilwirkung wird dabei ein elektrisches oder elektronischen Bauteil oder auch eine Schaltung aus mehreren Bauteilen mit einem für den Strom leitenden und einem sperrenden Zustand verstanden, wobei dessen oder deren Strom-Spannungs-Kennlinie im wesentlichen die Gestalt der Kennlinie für eine Diode aufweist. Wie in Fig. 4 gezeigt ist, wird als derartiges Bauelement 29 eine Diode gewählt. Es kann sich dabei um eine übliche Siliziumdiode oder eine Germaniumdiode handeln. Anstelle einer solchen Diode kann entsprechend einer in Fig. 7 gezeigten weiteren Ausführungsform auch ein Transistor 30 als Bauelement mit elektrischer Ventilwirkung gewählt werden. Der Transistor 30 ist dabei so angeschaltet, daß dessen Basis-Emitter-Strecke wie eine Diode wirkt.

In einem weiteren Ausführungsbeispiel für den Sollwertgeber 11 gemäß Fig. 5 kann der Verlauf der Kennlinie nun durch Anordnung von weiteren Widerständen R3 und R4 geeigneter Größe in gewissem Grade noch weiter beeinflußt werden.

So kann ein weiterer Festwiderstand R3 zwischen dem Schleiferanschluß 28 des Potentiometers 24 und der Kathode des Bauelements 29 mit elektrischer Ventilwirkung so geschaltet werden, daß die Verbindung 31 für die Leitung 13 zur Abnahme der Steuerspannung Us zwischen dem Widerstand R3 und dem Bauelement 29 mit elektrischer Ventilwirkung liegt. Die Größe dieses Widerstandes R3 beeinflußt die der minimalen Drehzahl zugeordnete Steuerspannung Us1, d. h. im wesentlichen den Abstand des linken horizontalen Astes 33 vom Nullpunkt bei der Kennlinie (man vergleiche dazu Fig. 6). Ist kein Widerstand R3 angeordnet, so verläuft dieser Ast 33 bei einer Steuerspannung Us1 in der Nähe vom Nullpunkt.

Weiter kann an der Verbindung 31 des Bauelementes 29 mit elektrischer Ventilwirkung und dem Schleiferanschluß 28 des linearen Potentiometers 24 ein weiterer mit der Masse in Verbindung stehender Festwiderstand R4 angeschaltet sein. Die Größe dieses Widerstandes R4 beeinflußt die der maximalen Drehzahl zugeordnete Steuerspannung Us2, d. h. im wesentlichen den Abstand des rechten horizontalen Astes 37 vom Nullpunkt bei der Kennlinie (man vergleiche dazu Fig. 6). Ist kein Widerstand R4 angeordnet, so verläuft dieser Ast 37 ungefähr bei einer der Versorgungsspannung Uv des Sollwertgebers 11 entsprechenden Steuerspannung Us2.

Das Verhältnis der beiden Steigungen im Bereich 34 und im Bereich 36 der Kennlinie gemäß Fig. 6 hängt, wie bereits erwähnt, von den Größen der Widerstände R1 und R2 ab. Gegebenenfalls können dabei auch noch die weiteren Widerstände R3 und R4, falls vorhanden, eine gewisse Rolle spielen. Damit die Steigung im Bereich 34 flach im Verhältnis zu derjenigen im Bereich 36 verläuft, empfiehlt es sich, die Größe der Widerstände R1 und R2 niederohmiger als diejenige der Widerstände R3 und R4 zu wählen.

Die Größe der Bereiche 34 und 36, d. h. die Länge des Verstellweges sk des Betätigungsorgans 12 bis zum Knickpunkt 35 der Kennlinie gemäß Fig. 6, läßt sich den gewünschten Gegebenheiten entsprechend einer weiteren Ausführungsform der Erfindung, die in Fig. 8 zu sehen ist, besonders einfach anpassen. Dazu wird ein weiteres Bauelement 38 mit elektrischer Ventilwirkung in Reihe mit dem ersten Bauelement 29 mit elektrischer Ventilwirkung geschaltet und zwar zwischen dem Bauelement 29 mit elektrischer Ventilwirkung und der Verbindung 31, an der die der Elektronik 10 zugeführte Steuerspannung Us über die Leitung 13 abgenommen wird. Bei diesem weiteren Bauelement 38 mit elektrischer Ventilwirkung kann es sich beispielsweise wiederum um eine Diode oder die Basis-Emitter-Strecke eines Transistors handeln. Das weitere Bauelement 38 mit elektrischer Ventilwirkung wird dabei mit seiner Anode an die Kathode des Bauelementes 29 mit elektrischer Ventilwirkung geschaltet.

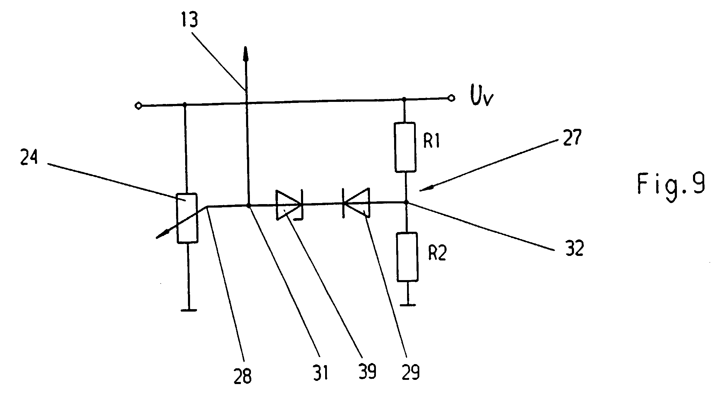

Besonders vorteilhaft ist es, als weiteres Bauelement mit elektrischer Ventilwirkung eine Zenerdiode 39 zu verwenden, wie es im Schaltbild gemäß Fig. 9 gezeigt ist. Die Zenerdiode 39 wird so gepolt, daß deren Kathode an die Kathode des Bauelementes 29 mit elektrischer Ventilwirkung angeschaltet ist. Damit wird die Durchlaß- bzw. Sperrspannung dieser Anordnung durch die Durchbruchspannung der Zenerdiode 39 variiert, was wiederum zu einer Veränderung der Lage des Knickpunktes 35 in der Kennlinie des Sollwertgebers 11 gemäß Fig. 6 führt, wie bereits weiter oben erläutert ist. Durch Wahl einer Zenerdiode 39 mit geeigneter Durchbruchspannung kann die Lage des Knickpunktes 35 an die gewünschte Stelle in der Kennlinie gelegt werden und damit die Größe der Bereiche 34 und 36 sowie der zugehörige Verstellweg sk am Betätigungsorgan 12 wunschgemäß festgelegt werden.

Das in der erfindungsgemäßen Schaltungsanordnung verwendete Baulement 29 mit elektrischer Ventilwirkung ist ein solches, das im wesentlichen zwei Zustände abnehmen kann, nämlich einen leitenden und einen sperrenden Zustand. In einer Weiterbildung der Erfindung läßt sich anstelle eines Bauelementes mit elektrischer Ventilwirkung auch ein Bauelement mit elektrischer Regelcharakteristik, d. h. ein elektrisch oder elektronisch regelbares Bauelement, beispielsweise ein Transistor einsetzen, wodurch sich die Kennlinie des Sollwertgebers besonders im Bereich 36 (siehe Fig. 5) noch verändern läßt. So kann der in Fig. 7 gezeigte Transistor 30, mit seinem Collector am Verbindungspunkt 32 und dessen Basis am Schleiferanschluß 28 angeschlossen sein. Dann erhält man eine Kennlinie, die im Bereich 36 (vgl. Fig. 5) nicht nur steil linear, sondern exponentiell ansteigt.

Der erfindungsgemäße Sollwertgeber 11 ist in Zusammenhang mit einer Schaltungsanordnung zur Drehzahlregelung von Elektromotoren erläutert. Insbesondere ist auch ein elektrischer Schalter 1 beschrieben, in dem eine derartige Schaltungsanordnung enthalten ist und der sich vorzugsweise an Elektrohandwerkzeugen einsetzen läßt. Selbstverständlich ist die Anwendung des Sollwertgebers 11 nicht auf einen solchen Einsatzfall beschränkt. Vielmehr läßt sich ein derartiger Sollwertgeber 11 überall dort einsetzen, wo ein Sollwertgeber 11 benötigt wird, dessen Kennlinie zwei Bereiche 34, 36 mit unterschiedlicher Steigung aufweisen soll. Beispielsweise kann ein solcher Sollwertgeber 11 auch als Drehpotentiometer in Geräten der Unterhaltungselektronik, in Meßgeräten, usw. eingesetzt werden.
- 1: Elektrischer Schalter
- 2: Schaltergehäuse
- 3: Leiterplatte
- 4: Bauelemente (auf der Leiterplatte)
- 5: Anker
- 6: Feldwicklung
- 6': Feldwicklung
- 7: Netzschalter
- 8: Pol (der Versorgungsspannung)
- 8': Pol (der Versorgungsspannung)
- 9: Triac
- 10: Elektronik zur Drehzahlregelung
- 11: Sollwertgeber
- 12: Betätigungsorgan
- 13: Leitung (vom Sollwertgeber zur Elektronik)
- 14: Richtungspfeile (bei Betätigungsorgan)
- 14': Richtungspfeile (bei Betätigungsorgan)
- 15: Betätigungsstößel
- 16: Kontaktwippe
- 17: Schaltnocken
- 18: Ende der Kontaktwippe
- 18': Ende der Kontaktwippe
- 19: Anschlußkontakt
- 20: Zugfeder
- 21: Ansatz (am Betätigungsstößel)
- 22: Schleifer
- 23: Widerstandsbahn
- 23': Widerstandsbahn
- 24: Potentiometer
- 25: Substrat
- 26: Leitsilberschicht
- 26': Leitsilberschicht
- 27: Spannungsteiler (Widerstände R1, R2)
- 28: Schleiferanschluß (des Potentiometers)
- 29: Bauelement mit elektrischer Ventilwirkung
- 30: Transistor
- 31: Verbindung (zwischen Bauelement und Potentiometer)
- 32: Verbindungspunkt (zwischen den beiden Widerständen am Spannungsteiler)
- 33: linker horizontaler Ast der Kennlinie
- 34: Bereich der Kennlinie (flache Steigung)
- 35: Knickpunkt (in Kennlinie)
- 36: Bereich der Kennlinie (steile Steigung)
- 37: rechter horizontaler Ast der Kennlinie
- 38: weiteres Bauelement mit elektrischer Ventilwirkung
- 39: Zenerdiode

## Patentansprüche

1. Schaltungsanordnung zur Drehzahlregelung von Elektromotoren mittels einer Phasenanschnittsteuerung mit einem in Reihe zum Anker (5) und der Feldwicklungen (6, 6') des Elektromotors geschalteten, Schaltereigenschaften aufweisenden elektronischen Bauteil, vorzugsweise einem Triac (9), das von einer Elektronik (10) mit einem Sollwertgeber (11) zur Einstellung der Drehzahl angesteuert wird, wobei der ein Potentiometer (24), das sich aus Widerstandsbahnen (23,23') und einem Schleifer (22) zusammensetzt beinhaltende Sollwertgeber (11) eine mit der einzustellenden Drehzahl korrelierende elektrische Steuergröße, vorzugsweise eine Steuerspannung (Us), an die Elektronik (10) abgibt, dadurch gekennzeichnet, daß zwischen dem Schleiferanschluß (28) des linearen Potentiometers (24) und dem Verbindungspunkt (32) von zwei, einen Spannungsteiler (27) bildenden, zwischen der Versorgungsspannung Uv des Sollwertgebers (11) und der Masse liegenden Festwiderständen (R1, R2) ein Bauelement (29) mit elektrischer Regelcharakteristik angeschaltet ist und die elektrische Steuergröße an der Verbindung (31) zwischen dem Bauelement (29) mit elektrischer Regelcharakterisitk und dem Schleiferanschluß (28) des Potentiometers (24) abnehmbar ist.

2. Schaltungsanordnung nach Anspruch 1, dadurch gekennzeichnet, daß es sich bei dem Bauelement (29) mit elektrischer Regelcharakteristik um ein Bauelement (29) mit elektrischer Ventilwirkung handelt, wobei vorzugsweise die Kathode des Bauelements (29) mit elektrischer Ventilwirkung dem Schleiferanschluß (28) des Potentiometers (24) zugewandt angeschaltet ist.

3. Schaltungsanordnung nach Anspruch 1 oder 2, dadurch gekennzeichnet, daß ein weiterer Festwiderstand (R3) zwischen dem Schleiferanschluß (28) des Potentiometers (24) und der Verbindung (31) zur Abnahme der Steuergröße geschaltet ist.

4. Schaltungsanordnung nach einem der Ansprüche 1 bis 3, dadurch gekennzeichnet, daß ein weiterer mit der Masse in Verbindung stehender Festwiderstand (R4) an der Verbindung (31) zur Abnahme der Steuergröße angeschaltet ist.

5. Schaltungsanordnung nach Anspruch 3 und 4, dadurch gekennzeichnet, daß die Festwiderstände (R1, R2) des Spannungsteilers (27) niederohmiger als die weiteren Festwiderstände (R3, R4) sind.

6. Schaltungsanordnung nach einem der Ansprüche 1 bis 5, dadurch gekennzeichnet, daß es sich bei dem Bauelement (29) mit elektrischer Ventilwirkung um eine Diode handelt.

7. Schaltungsanordnung nach Anspruch 6, dadurch gekennzeichnet, daß es sich bei der Diode um eine Siliziumdiode handelt.

8. Schaltungsanordnung nach Anspruch 6, dadurch gekennzeichnet, daß es sich bei der Diode um eine Germaniumdiode handelt.

9. Schaltungsanordnung nach einem der Ansprüche 1 bis 5, dadurch gekennzeichnet, daß es sich bei dem Bauelement (29) mit elektrischer Ventilwirkung um einen Transistor (30) handelt, wobei dessen Basis-Emitter-Strecke zwischen dem Verbindungspunkt (32) der beiden Festwiderstände (R1, R2) und der Verbindung (31), an der die elektrische Steuergröße abgenommen ist, angeschaltet ist.

10. Schaltungsanordnung nach einem der Ansprüche 1 bis 9, dadurch gekennzeichnet, daß ein weiteres Bauelement (38) mit elektrischer Ventilwirkung in Reihe mit dem ersten Bauelement (29) mit elektrischer Ventilwirkung zwischen dem ersten Bauelement (29) mit elektrischer Ventilwirkung und der Verbindung (31), an der die elektrische Steuergröße abgenommen ist, geschaltet ist.

11. Schaltungsanordnung nach Anspruch 10, dadurch gekennzeichnet, daß die Anode des weiteren Bauelementes (38) mit elektrischer Ventilwirkung an die Kathode des ersten Bauelementes (29) mit elektrischer Ventilwirkung geschaltet ist.

12. Schaltungsanordnung nach Anspruch 10 oder 11, dadurch gekennzeichnet, daß es sich bei dem weiteren Bauelement (38) mit elektrischer Ventilwirkung um eine Diode handelt.

13. Schaltungsanordnung nach Anspruch 10 oder 11, dadurch gekennzeichnet, daß es sich bei dem weiteren Bauelement (38) mit elektrischer Ventilwirkung um einen Transistor handelt, wobei dessen Basis-Emitter-Strecke zwischen dem ersten Bauelement (29) mit elektrischer Ventilwirkung und der Verbindung (31), an der die elektrische Steuergröße abgenommen ist, angeschaltet ist.

14. Schaltungsanordnung nach Anspruch 10, dadurch gekennzeichnet, daß es sich bei dem weiteren Bauelement (38) mit elektrischer Ventilwirkung um eine Zenerdiode (39) handelt.

15. Schaltungsanordnung nach Anspruch 14, dadurch gekennzeichnet, daß die Kathode der Zenerdiode (39) an der Kathode des ersten Bauelements (29) mit elektrischer Ventilwirkung angeschaltet ist.

16. Elektrischer Schalter (1) zur Drehzahlregelung von Elektromotoren, insbesondere in Elektrohandwerkzeugen, mit einem verstellbar am Schaltergehäuse (2) gelagerten Betätigungsorgan (12), an dem ein Betätigungsstößel (15) zur Verstellung eines im Inneren des Schaltergehäuses (2) befindlichen Potentiometers (24), das sich aus Widerstandsbahnen (23,23') und einem Schleifer (22) zusammensetzt, befestigt ist, wobei von einem das Potentiometer (24), beinhaltenden Sollwertgeber (11) eine mit dem Verstellweg (s) des Betätigungsorgans (12) korrelierende elektrische Steuergröße, vorzugsweise eine Steuerspannung (Us), an eine im Schalter (1) befindliche Elektronik (10) abgegeben wird und von der Elektronik (10) mittels einer Phasenanschnittsteuerung die der elektrischen Steuergröße entsprechende Drehzahl am Elektromotor einstellbar ist, dadurch gekennzeichnet, daß bei dem im Schaltergehäuse (2) befindlichen Sollwertgeber (11) zwischen dem Schleiferanschluß (28) des linearen Potentiometers (24) und dem Verbindungspunkt (32) von zwei, einen Spannungsteiler (27) bildenden, zwischen der Versorgungsspannung (Uv) des Sollwertgebers (11) und der Masse liegenden Festwiderständen (R1, R2) ein Bauelement (29) mit elektrischer Ventilwirkung angeschaltet ist und die elektrische Steuergröße an der Verbindung (31) zwischen dem Bauelement (29) mit elektrischer Ventilwirkung und dem Schleiferanschluß (28) des Potentiometers (24) abnehmbar ist.

17. Sollwertgeber (11) zur Abgabe einer elektrische Steuergröße, vorzugsweise einer Steuerspannung (Us), wobei die Kennlinie des Sollwertgebers zwei Bereiche (34, 36) mit unterschiedlicher Steigung aufweist, bestehend aus einem Potentiometer (24), das sich aus Widerstandsbahnen (23,23') und einem Schleifer (22) zusammensetzt, dadurch gekennzeichnet, daß zwischen dem Schleiferanschluß (28) des linearen Potentiometers (24) und dem Verbindungspunkt (32) von zwei, einen Spannungsteiler bildenden, zwischen der Versorgungsspannung (Uv) des Sollwertgebers (11) und der Masse liegenden Festwiderständen (R1, R2) ein Bauelement (29) mit elektrischer Ventilwirkung angeschaltet ist und die elektrische Steuergröße an der Verbindung (31) zwischen dem Bauelement (29) mit elektrischer Ventilwirkung und dem Schleiferanschluß (28) des Potentiometers (24) abnehmbar ist.

## Claims

1. Circuit arrangement for the speed control of electric motors by means of a phase-angle control with an electronic component, preferably a triac (9), which is connected in series with the armature (5) and the field windings (6, 6') of the electric motor and has the properties of a switch, which component is activated by an electronic system (10) with a set-point transmitter (11) for adjusting the speed, whereby the set-point transmitter (11) comprising a potentiometer (24), made up of resistance paths (23, 23') and an arm (22), delivers an electrical control variable, preferably a control voltage (Us), correlating with the speed to be set to the electronic system (10), characterised in that a component (29) with electrical control characteristics is connected between the arm connection (28) of the linear potentiometer (24) and the connecting point (32) of two fixed resistors (R1, R2) which form a voltage divider (27) and are positioned between the supply voltage (Uv) of the set-point transmitter (11) and the earth and the electrical control variable can be picked up at the connection (31) between the component (29) with electrical control characteristics and the arm connection (28) of the potentiometer (24).

2. Circuit arrangement according to claim 1, characterised in that the component (29) with electrical control characteristics is a component (29) with electrical valve effect, whereby preferably the cathode of the component (29) with electrical valve effect is connected so as to face the arm connection (28) of the potentiometer (24).

3. Circuit arrangement according to claim 1 or 2, characterised in that an additional fixed resistor (R3) is connected between the arm connection (28) of the potentiometer (24) and the connection (31) for picking up the control variable.

4. Circuit arrangement according to one of claims 1 to 3, characterised in that an additional fixed resistor (R4) in connection with the earth is connected to the connection (31) for picking up the control variable.

5. Circuit arrangement according to claim 3 and 4, characterised in that the fixed resistors (R1, R2) of the voltage divider (27) are of lower resistance than the additional fixed resistors (R3, R4).

6. Circuit arrangement according to one of claims 1 to 5, characterised in that the component (29) with electrical valve effect is a diode.

7. Circuit arrangement according to claim 6, characterised in that the diode is a silicon diode.

8. Circuit arrangement according to claim 6, characterised in that the diode is a germanium diode.

9. Circuit arrangement according to one of claims 1 to 5, characterised in that the component (29) with electrical valve effect is a transistor (30), whereby its base-emitter-section is connected between the connection point (32) of the two fixed resistors (R1, R2) and the connection (31) at which the electrical control variable is picked up.

10. Circuit arrangement according to one of claims 1 to 9, characterised in that an additional component (38) with electrical valve effect is connected in series with the first component (29) with electrical valve effect between the first component (29) with electrical valve effect and the connection (31) at which the electrical control variable is picked up.

11. Circuit arrangement according to claim 10, characterised in that the anode of the additional component (38) with electrical valve effect is connected to the cathode of the first component (29) with electrical valve effect.

12. Circuit arrangement according to claim 10 or 11, characterised in that the additional component (38) with electrical valve effect is a diode.

13. Circuit arrangement according to claim 10 or 11, characterised in that the additional component (38) with electrical valve effect is a transistor, whereby its base-emitter-section is connected between the first component (29) with electrical valve effect and the connection (31) at which the electrical control variable is picked up.

14. Circuit arrangement according to claim 10, characterised in that the additional component (38) with electrical valve effect is a Zener diode (39).

15. Circuit arrangement according to claim 14, characterised in that the cathode of the Zener diode (39) is connected to the cathode of the first component (29) with electrical valve effect.

16. Electric switch (1) for the speed control of electric motors, in particular in electrical hand tools, with an activating element (12) mounted adjustably on the switch housing (2), on which an actuating slide (15) is secured for adjusting a potentiometer (24) positioned inside the switch housing (2) made up of resistance paths (23, 23') and an arm (22), whereby an electrical control variable, preferably a control voltage (Us), correlating with the displacement path (s) of the activating element (12), is delivered to an electronic system (10) positioned in the switch (1) by a set-point transmitter (11) comprising the potentiometer (24), and the speed corresponding to the electrical control variable is adjustable on the electric motor by the electronic system (10) by means of a phase-angle control, characterised in that a component (29) with electrical valve effect is connected in the set-point transmitter (11) positioned in the switch housing (2) between the arm connection (28) of the linear potentiometer (24) and the connection point (32) of two fixed resistors (R1, R2) which form a voltage divider (27) and are positioned between the supply voltage (Uv) of the set-point transmitter (11), and the earth and the electrical control variable can be picked up at the connection (31) between the component (29) with electrical valve effect and the arm connection (28) of the potentiometer (24).

17. Set-point transmitter (11) for delivering an electrical control variable, preferably a control voltage (Us), in which the characteristic curve of the set-point transmitter has two regions (34, 36) with different gradients, comprising a potentiometer (24) made up of resistor paths (23, 23') and an arm (22), characterised in that a component (29) with electrical valve effect is connected between the arm connection (28) of the linear potentiometer (24) and the connection point (32) of two fixed resistors (R1, R2) which form a voltage divider and are positioned between the supply voltage (Uv) of the set-point transmitter (11) and the earth and the electrical control variable can be picked up at the connection (31) between the component (29) with electrical valve effect and the arm connection (28) of the potentiometer (24).

## Revendications

1. Dispositif de commande pour le réglage de la vitesse de rotation de moteurs électriques, au moyen d'une commande par coupe comportant un élément de montage électronique monté en série avec l'induit (5) et les enroulements de champ (6,6') du moteur électrique et présentant des propriétés de commutation, de préférence un triac (9), qui est commandé par une électronique (10) avec un indicateur de valeur prescrite (11) pour le réglage de la vitesse de rotation, l'indicateur de valeur prescrite (11) comportant un potentiomètre (24) formé de voies de résistance (23,23') et d'un frotteur (22) transmettant une grandeur de commande électrique correspondant à la vitesse de rotation à régler, de préférence une tension de commande (Us), à l'électronique (10),
caractérisé en ce qu'entre le raccordement de frotteur (28) du potentiomètre linéaire (24) et le point de liaison (32) de deux résistances fixes (R1,R2), formant un diviseur de tension (27) et situées entre la tension d'alimentation (Uv) de l'indicateur de valeur prescrite (11) et la masse, est monté un élément de montage (29) présentant une caractéristique de réglage électrique, et la grandeur de commande électrique peut être prélevée sur la liaison (31) entre l'élément de montage (29) présentant la caractéristique de réglage électrique et le raccordement de frotteur (28) du potentiomètre (24).

2. Dispositif de commande selon la revendication 1,
caractérisé en ce qu'il s'agit, pour l'élément de montage (29) présentant la caractéristique de réglage électrique, d'un élément de montage (29) présentant un effet de soupape électrique, de préférence la cathode de l'élément de montage (29) présentant l'effet de soupape électrique étant agencée en regard du raccordement de frotteur (28) du potentiomètre (24).

3. Dispositif de commande selon l'une des revendications 1 ou 2,
caractérisé en ce qu'une autre résistance fixe (R3) est montée entre le raccordement de frotteur (28) du potentiomètre (24) et la liaison (31) pour le prélèvement de la grandeur de commande.

4. Dispositif de commande selon l'une des revendications 1 à 3,
caractérisé en ce qu'une autre résistance fixe (R4) reliée à la masse est raccordée à la liaison (31) pour le prélèvement de la grandeur de commande.

5. Dispositif de commande selon l'une des revendications 3 et 4,
caractérisé en ce que les résistances fixes (R1,R2) du diviseur de tension (27) présentent des impédances plus faibles que les autres résistances fixes (R3,R4).

6. Dispositif de commande selon l'une des revendications 1 à 5,
caractérisé en ce qu'il s'agit, pour l'élément de montage (29) présentant l'effet de soupape électrique, d'une diode.

7. Dispositif de commande selon la revendication 6,
caractérisé en ce qu'il s'agit, pour la diode, d'une diode de silicium.

8. Dispositif de commande selon la revendication 6,
caractérisé en ce qu'il s'agit, pour la diode, d'une diode de germanium.

9. Dispositif de commande selon l'une des revendications 1 à 5,
caractérisé en ce qu'il s'agit, pour l'élément de montage (29) présentant l'effet de soupape électrique, d'un transistor (30), dont le trajet base-émetteur est monté entre le point de liaison (32) des deux résistances fixes (R1,R2) et la liaison (31), sur laquelle est prélevée la grandeur de commande électrique.

10. Dispositif de commande selon l'une des revendications 1 à 9,
caractérisé en ce qu'un autre élément de montage (38) présentant un effet de soupape électrique est monté en série avec le premier élément de montage (29) présentant l'effet de soupape électrique, entre le premier élément de montage (29) présentant l'effet de soupape électrique et la liaison (31), sur laquelle est prélevée la grandeur de commande électrique.

11. Dispositif de commande selon la revendication 10,
caractérisé en ce que l'anode de l'autre élément de montage (38) présentant l'effet de soupape électrique est montée sur la cathode du premier élément de montage (29) présentant l'effet de soupape électrique.

12. Dispositif de commande selon l'une des revendications 10 ou 11,
caractérisé en ce qu'il s'agit, pour l'autre élément de montage (38) présentant l'effet de soupape électrique, d'une diode.

13. Dispositif de commande selon l'une des revendications 10 ou 11,
caractérisé en ce qu'il s'agit, pour l'autre élément de montage (38) présentant l'effet de soupape électrique, d'un transistor, dont le trajet base-émetteur est monté entre le premier élément de montage (29) présentant l'effet de soupape électrique et la liaison (31), sur laquelle est prélevée la grandeur de commande électrique.

14. Dispositif de commande selon la revendication 10,
caractérisé en ce qu'il s'agit, pour l'autre élément de montage (38) présentant l'effet de soupape électrique, d'une diode Zener (39).

15. Dispositif de commande selon la revendication 14,
caractérisé en ce que la cathode de la diode Zener (39) est montée sur la cathode du premier élément de montage (29) présentant l'effet de soupape électrique.

16. Commutateur électrique (1) pour le réglage de la vitesse de rotation de moteurs électriques, en particulier dans des outils manuels électriques, présentant un organe d'actionnement (12) monté de façon réglable sur le boîtier de commutateur (2), sur lequel organe d'actionnement est fixé un coulisseau d'actionnement (15) pour le déplacement d'un potentiomètre (24) situé à l'intérieur du boîtier de commutateur (2) et formé de voies de résistance (23,23') et d'un frotteur (22), un indicateur de valeur prescrite (11) comportant le potentiomètre (24) transmettant une grandeur de commande électrique correspondant à la course de déplacement (s) de l'organe d'actionnement (12), de préférence une tension de commande (Us), à une électronique (10) située dans le commutateur (1), et par l'électronique (10), la vitesse de rotation du moteur électrique, correspondant à la grandeur de commande électrique, peut être réglée au moyen d'une commande par coupe,
caractérisé en ce que, pour l'indicateur de valeur prescrite (11) situé dans le boîtier de commutateur (2), entre le raccordement de frotteur (28) du potentiomètre linéaire (24) et le point de liaison (32) de deux résistances fixes (R1,R2), formant un diviseur de tension (27) et situées entre la tension d'alimentation (Uv) de l'indicateur de valeur prescrite (11) et la masse, est monté un élément de montage (29) présentant un effet de soupape électrique, et la grandeur de commande électrique peut être prélevée sur la liaison (31) entre l'élément de montage (29) présentant l'effet de soupape électrique et le raccordement de frotteur (28) du potentiomètre (24).

17. Indicateur de valeur prescrite (11) pour émettre une grandeur de commande électrique, de préférence une tension de commande (Us), la ligne caractéristique de l'indicateur de valeur prescrite présentant deux zones (34,36) de pentes différentes, comportant un potentiomètre (24) formé de voies de résistance (23,23') et d'un frotteur (22),
caractérisé en ce qu'entre le raccordement de frotteur (28) du potentiomètre linéaire (24) et le point de liaison (32) de deux résistances fixes (R1,R2), formant un diviseur de tension et situées entre la tension d'alimentation (Uv) de l'indicateur de valeur prescrite (11) et la masse, est monté un élément de montage (29) présentant un effet de soupape électrique, et la grandeur de commande électrique peut être prélevée sur la liaison (31) entre l'élément de montage (29) présentant l'effet de soupape électrique et le raccordement de frotteur (28) du potentiomètre (24).
